# EUROPÄISCHE PATENTSCHRIFT

(11) **EP 1 663 565 B1**
(45) Veröffentlichungstag und Bekanntmachung des Hinweises auf die Patenterteilung: **21.05.2008**
(21) Anmeldenummer: 04765599.8
(22) Anmeldetag: 24.09.2004
(51) Int. Cl.: B23K 26/00, B23K 26/08, B23K 26/36, B41C 1/05, B44C 1/22, G05B 19/4099

(54) **VERFAHREN ZUR MEHRSCHICHTIGEN MATERIALABTRAGUNG EINER DREIDIMENSIONALEN OBERFLÄCHE DURCH VERWENDUNG EINES DIE OBERFLÄCHENSTRUKTUR BESCHRIEBENEN RASTERBILDES**
METHOD FOR MULTI-LAYER MATERIAL EROSION ON A THREE-DIMENSIONAL SURFACE BY USE OF A RASTER IMAGE DESCRIBING THE SURFACE STRUCTURE
PROCEDE D'ENLEVEMENT DE MATIERE SUR PLUSIEURS COUCHES DANS UNE SURFACE TRIDIMENSIONNELLE PAR L'UTILISATION D'UNE IMAGE MATRICIELLE DECRIVANT LA STRUCTURE DE SURFACE

(30) Priorität: 26.09.2003 DE 10345087
(43) Veröffentlichungstag der Anmeldung: 07.06.2006
(73) Patentinhaber: PEGUFORM GMBH, 79268 Bötzingen (DE)
(72) Erfinder: HESS, Raul, 79183 Waldkirch (DE)
(74) Vertreter: Neunert, Peter Andreas
(86) Internationale Anmeldenummer: PCT/EP2004/010761
(87) Internationale Veröffentlichungsnummer: WO 2005/030425

(56) Entgegenhaltungen:
- EP-A- 1 262 316
- DE-A1- 10 012 520
- US-A1- 2002 114 537
- US-B1- 6 300 595

## Beschreibung

Diese Anmeldung betrifft ein Verfahren zur mehrschichtigen Materialabtragung einer Oberfläche gemäß dem Oberbegriff des Anspruchs 1 (siehe, z.B., US-B1-6 300 595).

Der schichtweise Abtrag einer Materialschicht einer dreidimensionalen Oberfläche, wie beispielsweise einer Form zur Herstellung einer beliebigen Oberflächenstruktur erfolgte bisher mittels Ätzverfahren oder galvanischen Verfahren, bei welchen eine Positivform mit der gewünschten Oberflächengestaltung mit einem Metall überzogen worden ist, welches dann eine Negativform zur Herstellung des gewünschten Formteils oder der Folie ergibt. Diese Verfahrensvarianten erfordern immer eine große Anzahl von Verfahrensschritten, um eine Negativform für nur eine einzige Oberflächenstruktur zu erhalten. Dies hat zur Folge, dass bei jeder Änderung der Oberflächenstruktur dieselben Verfahrensschritte erneut anfallen.

Bislang sind vor allem zwei Verfahren verbreitet, um Werkzeuge zur Herstellung einer beliebig geformten, dreidimensionalen Oberfläche wirtschaftlich herzustellen, zum einen ist das die Ätznarbe, bei der die Oberfläche des Werkstücks unterschiedlich maskiert wird und dann durch eine Ätzflüssigkeit selektiv abgetragen wird. Dieses Verfahren kann mit Einschränkungen auch schichtweise angewendet werden und erzeugt dann allerdings einen abgestuften Übergang zwischen Narbgipfeln und

Narbtälern. Außerdem gibt es Schwierigkeiten bei komplizierten Geometrien der zu narbenden Fläche.

Ein anderes Verfahren ist das Galvano-Verfahren. Hierbei wird ein Positivmodell, das Belederungsmodell, mit einer Folie (oder Leder) bezogen, welche die gewünschte Narbe aufweist. In einem Abformverfahren wird dann die Narbe in ein Negativwerkzeug übernommen, das wiederum zur Herstellung eines (Positiv-) Badmodells verwendet wird. Auf dieses wird dann in einem Bad galvanisch eine Metallschicht aufgebracht. Das so erhaltene Galvanowerkzeug muss dann noch verstärkt werden, kann dann aber auch nur für bestimmte Verfahren zur Teileherstellung zur Anwendung kommen, die seine Oberfläche nicht zu stark beanspruchen. Verbreitet sind vor allem das Slush-Verfahren und das Sprühhaut-Verfahren. Zudem ist jedes dieser letztgenannten Verfahren sehr zeit- und kostenaufwendig.

Aufgrund des großen Aufwandes, welcher mit den aus dem Stand der Technik bekannten und in industriellem Maßstab zum Einsatz kommenden Verfahren verbunden ist, gibt es Ansätze, die Oberflächenstruktur mit einem Abtragmittel herzustellen. Ein vielseitig verwendbares Abtragmittel stellt ein Laser dar. Die Technologie der Abtragung von Material mittels Laser ist aus DE3939866 A1 aus dem Bereich der Lasergravur bekannt.

Die Materialabtragung durch Verdampfen einer Oberflächenschicht mittels Laser ist aus DE4209933 C2 bekannt. Der Laserstrahl wird aufgeweitet und durch drehbare Ablenkspiegel über eine von einem Rechner vorgegebene Bezugslinie geführt. Die Bezugslinien bilden ein Rasterfeld. Das Rasterfeld wird mehrmals vom Laserstrahl entlang in einem Winkel zueinander versetzter Bezugslinien abgefahren, wobei Material durch Verdampfung abgetragen wird. Durch die Variation der Richtung der Laserspuren durch Drehung in der Bearbeitungsebene um einen bestimmten Winkel werden systematische Überhöhungen in der Grenzschicht vermieden. Dadurch entsteht eine netzartige Struktur der Rasterlinien. Diese Technologie findet ausschließlich auf zweidimensionale Oberflächen, also ebene Bauteile, Anwendung. Gemäß der in der Patentschrift offenbarten Technologie wird ein gleichmäßiger Abtrag von Material im Rasterfeld angestrebt.

Eine zeilenweise Führung des Lasers in Bahnen (Rasterlinien), bzw. Spuren, im jeweiligen Bearbeitungsfeld des Lasers wird in DE10032981 A1 offenbart. Die Spuren werden bereichsweise auf ein sich bewegendes Werkstück aufgebracht. Um zu vermeiden, dass sich im Überlappungsbereich der Spuren an den Bereichsgrenzen eine scharfe Trennlinie ausbildet, die durch übermäßigen Materialabtrag im Überlappungsbereich entsteht, werden die Bereichsgrenzen bei jedem Abtrag versetzt. Mit anderen Worten, bei zeilenförmigem Abtrag eines Bereichs setzt der Laser am Rand nicht längs einer Linie ab, sondern fährt in die Nähe dieser Linie. Der Endpunkt der Abtragung liegt dann zwar in einem Abstandsbereich dieser Linie, dieser Abstandsbereich ist aber von Zeile zu Zeile verschieden. Da die Endpunkte sich somit statistisch um den Mittelwert der Linie verteilen, kann kein optischer Defekt wahrgenommen werden. Dieses Verfahren eignet sich zum Abtrag von Rasterfeldern, welche auf einer Ebene liegen. Sobald die Rasterfelder aber eine Neigung gegeneinander aufweisen, wird durch das Abtragmittel eine andere Materialmenge abgetragen, wenn sich das Abtragmittel aus dem Rasterfeld entfernt. Somit müsste jeder einzelne Endpunkt aufgezeichnet werden, der Materialabtrag bestimmt, und der für das benachbarte Rasterfeld vorgesehene Materialabtrag um den Fehlbetrag korrigiert werden. Aus diesem Grund ist das Verfahren für dreidimensionale Oberflächen nur unter hohem zusätzlichen Rechenaufwand anwendbar.

Die schichtweise Materialabtragung zur Erzeugung dreidimensionaler Strukturen in ebenen Oberflächen wird in den beiden Patentschriften US6300595 B1 und

US6407361 B1 offenbart. Dabei erfolgt die Materialabtragung aller Bearbeitungsfelder bei jedem Bearbeitungsvorgang einer Schicht in einer Form, die eine rotationssymmetrische Ausnehmung in einer ebenen Oberfläche darstellt.

Nach der Lehre der DE10116672 A1 werden Grob- und Feinstrukturen unterschiedlich bearbeitet, wobei Feinbereiche mittels Laser und Grobbereiche mittels einer Aushebvorrichtung bearbeitet werden. Diese Technologie eignet sich insbesondere für Bearbeitung von Metalloberflächen, welche beispielsweise auf Druckzylindern angeordnet sind. Die Grobbearbeitung erfolgt mittels mechanischer Abtragvorrichtungen.

In der EP 1 262 316 A1 wird ein Verfahren und eine Vorrichtung zur Herstellung einer Druckform beschrieben, wobei der Oberfläche eines Druckformrohlings ein Relief dadurch eingebracht wird, dass Material des Druckformrohlings durch Strahlung abgetragen wird. Bei dem Druckformrohling handelt es sich um einen plattenförmigen oder einen zylindrischen Rohling, der bei der Bearbeitung eine gleichmäßige Oberfläche bietet.

In der US 2002/0114537 A1 wird ein Verfahren und eine Vorrichtung zur Herstellung von dreidimensionalen Strukturen beschrieben. Bei diesem Verfahren werden computerunterstützt dreidimensional strukturierte Werkstücke aus einem Werkstoffblock herausgearbeitet, wobei es sich jedoch nicht um eine Oberflächenbehandlung zum Einbringen einer Oberflächenstruktur handelt.

Der Stand der Technik beschränkt sich auf die Bearbeitung ebener oder zylindrischer Oberflächen. Bislang gibt es kein Verfahren, welches eine Oberflächenstruktur in eine beliebig geformte dreidimensionale Oberfläche einbringt.

Es ist Aufgabe der Erfindung eine Oberflächenstruktur, wie beispielsweise eine Narbe, auf beliebige dreidimensionale Oberflächen aufzubringen. Zur Lösung dieser Aufgabe wurde das erfindungsgemäße Verfahren entwickelt, das die Möglichkeit bietet, beliebig geformte Werkzeuge und Modelle mit einer dreidimensionalen Oberflächenstruktur zu versehen. Eine derartige Oberflächenstruktur ist beispielsweise die Narbe des Leders, die dadurch gekennzeichnet ist, dass Narbgipfel unterschiedliche Höhen und Ausdehnungen aufweisen und der Übergang zwischen Narbgipfeln und Narbtälem gleichmäßig verläuft.

Es ist eine weitere Aufgabe der Erfindung, Trenn- oder Grenzlinien beim Materialabtrag ZU vermeiden. Dazu müssen die aus dem Stand der Technik bekannten Methoden dahingehend modifiziert werden, dass das Abtragmittel anstatt in einem zweidimensionalen Koordinatensystem oder einem Zylinderkoordinatensystem in einem beliebigen dreidimensionalen Koordinatensystem arbeitet.

Eine weitere Aufgabe der Erfindung ist die Verwendbarkeit des Verfahrens für verschiedene Arten von Materialien oder Materialkombinationen. Im Vergleich einem der bekannten Verfahren soll es zudem mit geringerem Zeitaufwand verbunden sein und ohne Einschränkungen in Bezug auf die abzubildende Oberflächenstruktur durchführbar sein.

Diese Aufgaben der Erfindung werden durch nachfolgend beschriebenes Verfahren zur ein- oder mehrschichtigen Materialabtragung einer beliebig geformten dreidimensionalen Oberfläche mittels eines punktförmig auf eine Oberfläche wirkenden Abtragmittels, wie eines Lasers, verwirklicht.

Das Verfahren zur mehrschichtigen Materialabtragung einer beliebig geformten dreidimensionalen Oberfläche mittels eines punktförmig auf eine Oberfläche wirkenden Abtrag gemäß der Erfindung ist im Anspruch 1 definiert.

Gemäß der Erfindung wird jede Schicht in eine Schnittfläche der dreidimensionalen Oberfläche transformiert, wobei die Schnittfläche durch eine mathematische Funktion beschrieben wird. Diese mathematische Funktion ist Grundlage für die Steuerung eines Abtragungsmittels in einem dreidimensionalen Koordinatensystem. Als Schnittfläche wird dabei eine gekrümmte Fläche bezeichnet, welche parallel zu der mit einer Oberflächenstruktur zu versehenden Oberfläche verläuft. Da sie die Textur oder Oberflächenstruktur schneidet, wird eine derartige Oberfläche in der Folge als Schnittfläche bezeichnet. Im einfachsten Fall, nämlich einer ebenen Oberfläche, handelt es sich um eine Schnittebene. Diese Schnittfläche wird mit einem Netz aus Polygonen überzogen. Der Laser, nimmt innerhalb eines Polygons einen Materialabtrag vor, wenn das Polygon einer Graustufe zugeordnet ist. Jedes Polygon der Schnittfläche wird mit Bearbeitungsflächen überzogen, wobei die Bearbeitungsfläche im Bearbeitungsbereich des Lasers vollständig enthalten ist. Da das Abtragmittel ein Laser ist, entspricht ein Bearbeitungsbereich dem Fokusbereich des Lasergeräts und umfasst mindestens ein Polygon der Schnittfläche. Innerhalb der Bearbeitungsfläche erfolgt entlang der Graustufen ein zeilenförmiger Materialabtrag. Die Polygone benachbarter Schnittflächen sind in vorteilhaften Ausgestaltungen zueinander versetzt oder gegeneinander gedreht angeordnet. In einer weiteren Ausgestaltung ist es möglich, die Polygone benachbarter Schnittflächen zufällig zueinander anzuordnen, wobei in jedem Fall gewährleistet sein sollte, dass die Polygone von zwei benachbarten Schnittflächen keine gemeinsamen Kanten aufweisen.

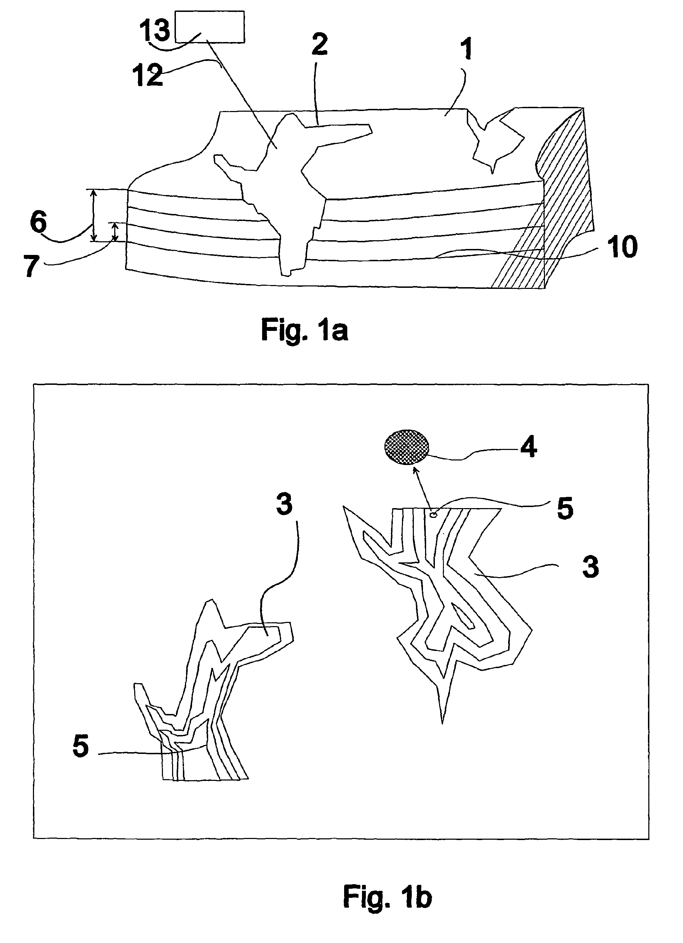

Fig. 1a ist eine Darstellung einer dreidimensionalen Oberfläche mit einer Oberflächenstruktur
Fig. 1b ist eine schematische Darstellung eines ersten Schrittes des Verfahrens

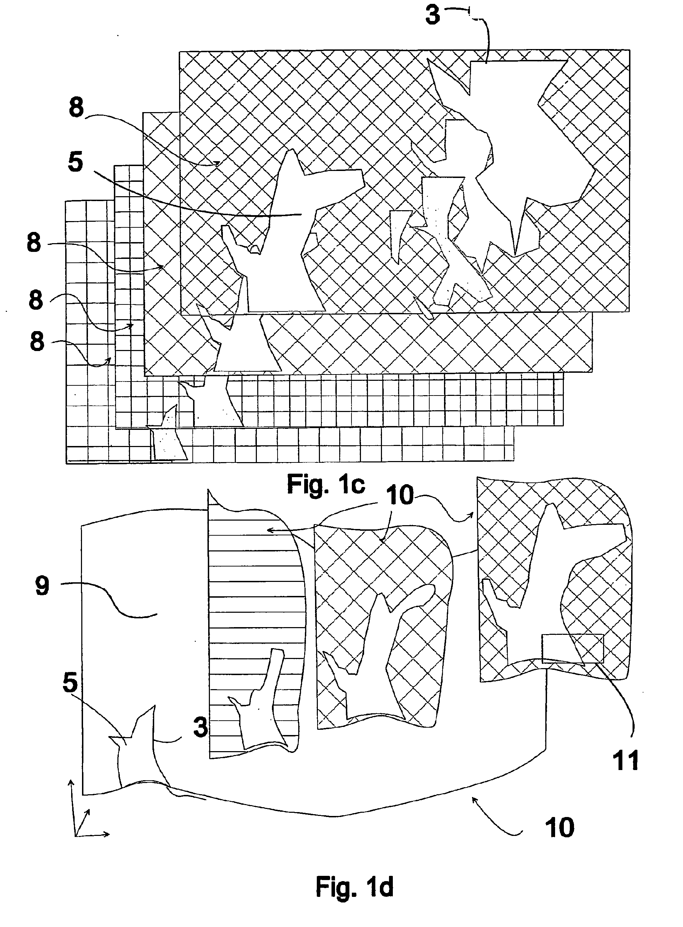

Fig. 1c ist eine schematische Darstellung eines zweiten Schrittes des Verfahrens
Fig. 1d ist eine schematische Darstellung eines dritten Schrittes des Verfahrens

Das Verfahren für den schichtweisen selektiven Formabtrag an einem Werkstück dient der Einbringung einer Struktur, beispielsweise in der Form einer Narbe, in das Werkstück, welches in Fig. 1a als dreidimensionale Oberfläche 1 dargestellt ist, die dadurch gekennzeichnet ist, dass die Übergänge zwischen Narbgipfeln und Narbtälern möglichst gleichmäßig verlaufen. Beliebige Oberflächenstrukturen oder Narben müssen derart dargestellt werden, dass sie mit einem bekannten Verfahren zur Abtragung von Material beim Laser hergestellt werden können. Hierbei muss man zwischen der Beschreibung der Topologie, d.h. der Geometrie des Werkstücks und der Oberflächenstruktur, beispielsweise der Narbe, unterscheiden, das heißt, der gewünschten Feinstrukturierung der Oberfläche, welche mit dem Werkstück durch einen formgebendes Verfahren erzeugt wird.

Um das Verfahren zur mehrschichtigen Materialabtragung einer beliebig geformten dreidimensionalen Oberfläche 1 mittels eines punktförmig auf diese Oberfläche wirkenden Laser durchzuführen, wird eine Oberflächenstruktur 2, welche sich auf der dreidimensionalen Oberfläche 1 befindet, auf eine zweidimensionale Fläche projiziert. Dieser zweidimensionalen Fläche ist mindestens ein Rasterbild 3 zugeordnet. Das Rasterbild 3 stellt eine zweidimensionale Abbildung der dreidimensionalen Oberflächenstruktur 2 dar und ist in Fig. 1b beispielhaft dargestellt. Die beiden Oberflächenstrukturen 2 in Fig. 1a werden somit durch zwei nebeneinander liegende Rasterbilder 3 beschrieben. Wenn man einen Schnitt durch die dreidimensionale Oberflächenstruktur parallel zur Oberfläche 1 legt, wird eine Schnittfläche 10 erzeugt, welche auf eine zweidimensionale Fläche projiziert wird. Diesem Schnitt wird eine Graustufe 5 zugeordnet. Die Umrisse der Graustufen 5 auf den Rasterbildern 3 entsprechen dabei Höhenlinien in der Oberflächenstruktur 2. Mit diesem Verfahren ist es möglich, jede beliebige Oberflächenstruktur 2 fotographisch abzubilden. Durch Mittel zur Grafikbearbeitung kann somit jeder Schicht 8 eine Graustufe 5 zugeordnet werden. Umgekehrt können die Graustufen 5, welche sich aus der photographischen Abbildung ergeben, eindeutig einer Schicht 8 zugeordnet werden. Für ein Mittel zur Grafikbearbeitung umfassen das Rasterbild 3 sowie die zweidimensionale Fläche eine Anzahl Bildpunkte 4. Jedem Bildpunkt 4 ist eine Graustufe 5 zugeordnet, wobei die Graustufe 5 ein Maß für die Tiefenabmessung 6 der Oberflächenstruktur ist.

Für einen Abtrag, welcher keine sichtbaren Stufungen aufweisen soll, ist es vorteilhaft, wenn zwei benachbarte Graustufen 5 auf zwei Schichten 8, welche im Raum zwei Schnittflächen 10 bilden, einer Höhendifferenz von maximal 10 µm entsprechen. Damit ist jeder Graustufe 5 die abzutragende Materialmenge zugeordnet.

Die Graduierung der Graustufen ist im Prinzip beliebig, es können maximal 256 Graustufen realisiert werden. Wenn man die Genauigkeit der Bearbeitung über der Tiefenabmessung variieren will, ist es daher möglich, den Abstand der Graustufen, und somit auch den Abstand der Schichten 8 voneinander, einzustellen. Für jeden Bildpunkt 4 gleicher Graustufe 5 wird dieselbe Materialmenge abgetragen. Sind mehrere Graustufen 5 vorhanden, wird die Materialmenge in mehreren Arbeitsschritten abgetragen. Jede Graustufe entspricht einer Schicht, die durch einen Laser 12, abgetragen wird. Je breiter die Schicht 8, desto größer ist das abzutragende Volumen. Die Schichtbreite ist bei Verwendung eines Lasers 12 nur durch die Breite des Fokusquaders beschränkt, welcher in der Folge beschrieben werden soll. Um eine derartige Schicht 8 zu bearbeiten, wird die zu der Schicht gehörende Schnittfläche 10 mit einer Vielzahl von aneinander angrenzenden Polygonen 9 überzogen. Der Laser nimmt innerhalb eines Polygons 9 einen Materialabtrag vor, wenn das Polygon 9 einer Graustufe 5 zugeordnet ist.

Die Polygone 9 auf der Schnittfläche 10 können durch eine mathematische Funktion beschrieben werden. Diese mathematische Funktion ist Grundlage für die Steuerung des Lasers in einem dreidimensionalen Koordinatensystem.

Jede Schnittfläche 10 wird anschließend mit Bearbeitungsflächen 11 überzogen. Eine derartige Bearbeitungsfläche ist in Fig. 1d dargestellt. Die Bearbeitungsfläche 11 umfasst den Bearbeitungsbereich des Abtragungsmittels, wobei das Abtragmittel ein Lasergerät ist. Um diese Polygone 9 mit dem Laser bearbeiten zu können, müssen sie in Bearbeitungsflächen 11 aufgeteilt werden. Eine derartige Bearbeitungsfläche wird Fig. 1d dargestellt. Da die Schnittfläche 10 als mathematische Funktion zumindest näherungsweise durch die Polygone 9 beschrieben werden kann, ist es möglich, diese Bearbeitungsflächen 11 aus der Funktion zu errechnen, wenn die optischen Eigenschaften des Lasergeräts bekannt sind. Die Größe der Bearbeitungsfläche 11 wird idealerweise so gewählt, dass sie bei entsprechender Stellung des Scanners lediglich durch Einflussnahme auf die Galvanospiegel abgescannt werden kann. Dabei ist eine Scannerstellung möglichst näherungsweise senkrecht auf die Bearbeitungsfläche 11 vorteilhaft. Des weiteren sollte die Änderung der Entfernung zwischen Scanner und Bearbeitungsfläche 11 gering gehalten werden. Ziel muss bei der Wahl der Größe des Bearbeitungsfläche 11 in jedem Fall sein, dass weder durch die Winkelstellung des Lasers, noch durch die Veränderung des Abstandes zwischen der Bearbeitungsfläche und dem Scanner eine unerwünschte Änderung der Stärke des Materialabtrages erfolgt.

Bei jeder Bearbeitungsfläche 11 ist zu beachten, dass sie als ganzes im Fokus des Lasers zu liegen kommt. Die Bearbeitungsfläche 11 ist ein Teil des Bearbeitungsbereichs. Den möglichen Bearbeitungsbereich bei einer bestimmten Position des Scanners kann man bei Einsatz einer Planfeldlinse durch den Fokus-Quader beschreiben. Seine Höhe, bei vorgegebenem maximalen Fehler der abgetragenen Schichtdicke, ist gegeben durch die maximale Fokustiefe (= Abweichung von der Brennweite) und seine Seitenlänge durch die entsprechende maximale Auslenkung der Galvanospiegel im Scanner. Der Abstand zwischen Scanner und der Mittelebene des Quaders ist durch die Brennweite der Laseroptik gegeben. Innerhalb des Fokus-Quaders kann die Bearbeitungsfläche 11 durch mindestens ein Polygon 9 angenähert werden, dessen Ecken alle auf einer Schnittfläche 10 liegen, die exakt den Abstand der Brennweite zu der Laseroptik hat und senkrecht zur Richtung des Laserstrahles in der Mittelstellung der Ablenkspiegel steht. Die Bearbeitungsfläche 11 entspricht somit dem Fokusbereich des Lasergeräts und umfasst mindestens ein Polygon 9. Innerhalb der Bearbeitungsfläche 11 erfolgt entlang der Graustufen 5 ein zeilenförmiger Materialabtrag, so das Polygon Graustufen 5 enthält. In Polygonen ohne Graustufen 5 erfolgt kein Materialabtrag.

Zur Vermeidung von Trennlinien, die in dem Bereich entstehen, in dem eine Laserspur endet und die nächste beginnt wird die Schichtdicke so stark herabgesetzt, dass die entstehende Grenzlinie eine vernachlässigbar kleine Höhe im Vergleich zu der Gesamthöhe der Oberflächenstruktur, wie beispielsweise einer Ledernarbe, aufweist. Die Addition des Trennlinien-Fehlers an den Polygonkanten wird dadurch vermieden, dass jeder abzutragenden Schnittfläche 10 ein eigenes unabhängiges 3-dimensionales Polygonnetz zugeordnet wird. Dieses kann völlig frei gewählt werden, unter Beachtung der oben genannten Vorgaben. Außerdem muss beachtet werden, dass sich Polygonränder benachbarter Schnittflächen 10 zwar überschneiden, aber keinesfalls übereinander liegen dürfen. Ansonsten addiert sich der Trennlinien-Fehler. Das bedeutet, bei Betrachtung eines beliebigen Punktes auf der zu bearbeitenden Schnittfläche des Werkstückes und einem Materialabtrag in n Schichten, dass dieser Punkt zu n verschiedenen Polygonen "gehört". Die Polygone 9 jeder Schnittfläche 10 sind in vorteilhaften Ausgestaltungen zueinander versetzt oder gegeneinander gedreht angeordnet. In einer weiteren Ausgestaltung ist es möglich, die Polygone 9 jeder Schnittfläche 10 zufällig zueinander anzuordnen, wobei in jedem Fall gewährleistet sein sollte, dass die Polygone 9 von zwei benachbarten Schnittflächen 10 keine gemeinsamen Kanten aufweisen.

Bei der Bearbeitung des Werkstückes muss ein Lasergerät 13 zum Einsatz kommen, bei dem der Scanner, in dem sich die Galvanospiegel befinden, in Bezug auf das Werkstück eine ausreichende Beweglichkeit aufweist, um eine Position anfahren zu können, die sich möglichst senkrecht relativ zu jedem Polygon im Abstand der Brennweite der Laseroptik befindet, d.h. die derjenigen Position entspricht, die bei der Berechnung der Polygone zugrunde gelegt wurde.

Für die Steuerung des Lasergerätes im Sinne einer wirtschaftlichen Bearbeitung ist es vonnöten, die Polygone im Datensatz so zu ordnen, dass sie von der Steuerelektronik in einer Reihenfolge eingelesen werden, die möglichst geringe Verfahrwege des Scanners zur Folge hat.

### Bezugszeichenliste

- 1.: Oberfläche
- 2.: Oberflächenstruktur
- 3.: Rasterbild
- 4.: Bildpunkt
- 5.: Graustufe
- 6.: Tiefe
- 7.: Höhendifferenz
- 8.: Schicht
- 9.: Polygon
- 10.: Schnittfläche
- 11.: Bearbeitungsfläche
- 12.: Laser
- 13.: Lasergerät

## Patentansprüche

1. verfahren zur mehrschichtigen Materialabtragung einer Oberfläche (1) mittels eines punktförmig auf eine Oberfläche wirkenden Abtraglasers (12), mittels welchem eine Oberflächenstruktur (2) auf der dreidimensionalen Oberfläche (1) erzeugt wird, wobei der Oberfläche (1) mindestens ein Rasterbild (3) zugeordnet ist, durch welches die Oberflächenstruktur (2) beschrieben wird, welche durch mehrschichtige Materialabtragung erzeugt werden soll,
**dadurch gekennzeichnet, dass** die Oberfläche (1) eine beliebig geformte, nicht ebene dreidimensionale Oberfläche (1) ist und das Rasterbild (3) eine zweidimensionale Abbildung der dreidimensionalen Oberfläche (1) ist, wobei das Rasterbild (3) Bildpunkte (4) umfasst und jedem Bildpunkt (4) eine Graustufe (5) zugeordnet ist, wobei die Bildpunkte (4) gleicher Graustufe zu derselben Schicht (8) gehören, und jede Schicht (8) durch eine Vielzahl von aneinander angrenzenden Polygonen (9) beschrieben wird, welche die dreidimensionale Oberfläche (1) als mathematische Funktion modellieren, wobei die mathematische Funktion Grundlage für die Steuerung des Lasers (12) in einem dreidimensionalen Koordinatensystem ist.

2. Verfahren nach Anspruch 1,
**dadurch gekennzeichnet, dass** die Graustufe (5) ein Maß für die Tiefe (6) der Oberflächenstruktur (2) ist.

3. Verfahren nach Anspruch 2,
**dadurch gekennzeichnet, dass** jeder Graustufe (5) die abzutragende Materialmenge zugeordnet ist.

4. Verfahren nach Anspruch 3,
**dadurch gekennzeichnet, dass** für jeden Bildpunkt (4) gleicher Graustufe (5) dieselbe Materialmenge abgetragen wird.

5. Verfahren nach Anspruch 1,
**gekennzeichnet dadurch, dass** der Laser (12) innerhalb eines Polygons (9) einen Materialabtrag vornimmt, wenn das Polygon (9) einer Graustufe (5) zugeordnet ist.

6. Verfahren nach Anspruch 5,
**gekennzeichnet dadurch, dass** innerhalb des Polygons (9) mindestens eine Bearbeitungsfläche (11) definiert ist, innerhalb derer ein zeilenförmiger Abtrag erfolgt.

7. Verfahren nach Anspruch 1,
**gekennzeichnet dadurch, dass** die Polygone (9) von je zwei übereinander liegenden Schichten zueinander versetzt, gedreht, in zufallsgenerierter Anordnung oder in unterschiedlicher Größe angeordnet sind, sodass sie keine gemeinsamen Kanten aufweisen.

## Claims

1. Method for the multi-layer removal of material from a surface (1) by means of an erosion laser (12) which works in a point-wise manner on a surface, and by means of which a surface structure (2) is produced on the three-dimensional surface (1), wherein assigned to the surface (1) is at least one raster image (3), via which the surface structure (2) is described that is to be produced through multi-layer material removal,
**characterised in that**
the surface (1) is an arbitrarily shaped three-dimensional surface (1) that is not flat, and the raster image (3) is a two-dimensional representation of the three-dimensional surface (1), wherein the raster image (3) comprises pixels (4), and assigned to each pixel (4) is a grey level (5), wherein the pixels (4) of the same grey level belong to the same layer (8), and each layer (8) is described by numerous polygons (9) which adjoin one another, and which model the three-dimensional surface (1) as a mathematical function, wherein the mathematical function forms the basis for controlling the laser (12) in a three-dimensional system of coordinates.

2. Method according to claim 1, **characterised in that** the grey level (5) is a measure of the depth (6) of the surface structure (2).

3. Method according to claim 2, **characterised in that** assigned to each grey level (5) is the quantity of material that is to be removed.

4. Method according to claim 3, **characterised in that** for each pixel (4) of the same grey level (5), the same quantity of material is removed.

5. Method according to claim 1, **characterised in that** the laser (12) undertakes the removal of material within a polygon (9), when the polygon (9) is assigned to a grey level (5).

6. Method according to claim 5, **characterised in that** within the polygon (9) at least one processing surface (11) is defined, within which line-by-line erosion takes place.

7. Method according to claim 1, **characterised in that** the polygons (9) of respectively two layers lying over one another are arranged offset relative to one another, rotated, in randomly-generated arrangement, or of different sizes, so that they do not have any common edges.

## Revendications

1. Procédé d'enlèvement de matière sur plusieurs couches dans une surface (1) à l'aide d'un laser d'enlèvement (12) agissant sur la surface, et qui génère une structure de surface (2) sur la surface tridimensionnelle (1),
la surface (1) correspondant au moins à une image tramée (3) décrivant la structure de surface (2) que l'on veut générer par un enlèvement de matière sur plusieurs couches,
**caractérisé en ce que**
la surface supérieure (1) est une surface (1) de forme quelconque tridimensionnelle non plane et l'image tramée (3) est une image à deux dimensions de la surface tridimensionnelle (1),
l'image tramée (3) comprend des points image (4) et à chaque point image (4) est associé un niveau de gris (5),
les points image (4) de même niveau de gris appartiennent à la même couche (8) et chaque couche (8) est décrite par un ensemble de polygones adjacents (9) qui modélise la surface tridimensionnelle (1) sous la forme d'une fonction mathématique,
la fonction mathématique étant la base de la commande du laser (12) dans un système de coordonnées à trois dimensions.

2. Procédé selon la revendication 1,
**caractérisé en ce que**
le niveau de gris (5) est une mesure de la profondeur (6) de la structure de surface (2).

3. Procédé selon la revendication 2,
**caractérisé en ce qu'**
à chaque niveau de gris (5) est associée une quantité de matière à enlever.

4. Procédé selon la revendication 3,
**caractérisé en ce que**
pour chaque point image (4) de même niveau de gris (5) on enlève la même quantité de matière.

5. Procédé selon la revendication 1,
**caractérisé en ce que**
le laser (12) effectue un enlèvement de matière dans un polygone (9), ce polygone (9) étant associé à un niveau de gris (5).

6. Procédé selon la revendication 5,
**caractérisé en ce que**
dans le polygone (9) on définit au moins une surface travail (11) à l'intérieur de laquelle on effectue un enlèvement sous forme de lignes.

7. Procédé selon la revendication 1,
**caractérisé en ce que**
les polygones (9) de deux couches superposées sont décalés, tournés ou associés suivant une génération aléatoire ou suivant des dimensions différentes de manière à ce qu'ils ne possèdent pas d'arête commune.
